# EUROPEAN PATENT APPLICATION

(11) **EP 4 202 743 A1**
(43) Date of publication of application: **28.06.2023**
(21) Application number: 21217343.9
(22) Date of filing: 23.12.2021
(51) Int. Cl.: G06F 21/57, G06F 8/61, H04L 9/32

(54) **A PROVISIONING CONTROL APPARATUS AND METHOD FOR PROVISIONING ELECTRONIC COMPONENTS OR DEVICES**

(71) Applicant: Secure Thingz Limited, Trumpington, Cambridge CB2 9FF (GB)
(72) Inventor: WOODRUFF, Tim, Cambridge, CB2 1RR (GB); BOTT, Andrew, Cambridge, CB23 7PW (GB)
(74) Representative: Patentship Patentanwaltsgesellschaft mbH

(57) **Abstract**

The invention relates to a provisioning control apparatus (140) configured to be coupled to a provisioning equipment server (160a), wherein the provisioning equipment server (160a) is electrically connectable with at least one electronic device (170) for provisioning the electronic device (170) with security sensitive provisioning data (150). The provisioning control apparatus (140) comprises a communication interface (143) configured to receive information about one or more provisioning capabilities of the provisioning equipment server (160a) for provisioning the electronic device (170) with the security sensitive provisioning data (150). The provisioning control apparatus (140) further comprises a processing circuitry (141) configured to generate, based on a product configuration of the electronic device (170) and the information about the one or more provisioning capabilities of the provisioning equipment server (160a), a provisioning script, wherein the provisioning script defines one or more provisioning operations for provisioning the electronic device (170) with the security sensitive provisioning data (150).

## Description

### TECHNICAL FIELD

The invention relates to the secure production and provisioning of electronic components or devices. More specifically, the invention relates to an apparatus and method for controlling the provisioning of electronic components or devices.

### BACKGROUND OF THE INVENTION

The production and assembly of state-of-the-art electronic equipment, such as smartphones, tablet computers as well as other types of electronic consumer or loT equipment, often happens in a distributed fashion in that the various electronic components or devices, including the electronic chips of electronic consumer equipment are manufactured, provisioned or personalized and finally assembled at different locations and by different parties. For instance, an electronic chip for an electronic equipment may be originally manufactured by a chip manufacturer and provisioned by another party with security sensitive provisioning data, such as cryptographic keys and/or a firmware, using a provisioning system (also referred to as production system) before being assembled into the final end product by the manufacturer of the electronic equipment, e.g. an OEM. A similar problem may arise in in-system programming (ISP), also called in-circuit serial programming (ICSP), where electronic components may be programmed, i.e. provided with security sensitive provisioning data and specific configuration data, while already installed in an electronic equipment, rather than requiring the electronic component, e.g. electronic chip, to be programmed prior to installing it into the electronic equipment.

For provisioning electronic components or devices with security sensitive provisioning data by a third party it is known to use a production system including a provisioning control apparatus, for instance, in the form of a secure hardware security module (HSM). Often the security sensitive provisioning data may contain or be based on OEM keys securely stored and/or processed by such a secure HSM.

As loT devices are getting more diverse and complex, their sustained production becomes fraught with problems often resulting in becoming tied to a single production system that might go out of support before the product does, without the possibility of moving to a different production system. The cost of designing the production system will increase as devices become more complex, and each OEM will have to bear this cost and associated time delay individually as they each develop their own different security mechanisms. Also, as volume increases the initial production system may be inefficient for larger volumes but production cannot be moved for fear of incorrect manufacture on a different production system, compounded by unavailability of original development staff capable of validating the device.

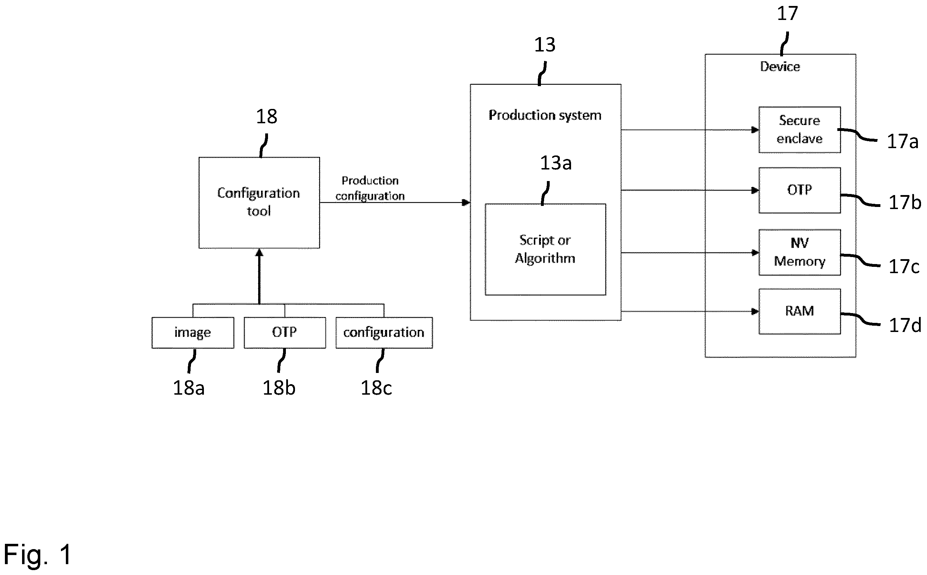

Figure 1 shows a conventional provisioning system 13 for provisioning an electronic device 17, for instance, an loT device 17 with provisioning data. A production configuration that is generated by a configuration tool and tailored to the specific electronic device 17 to be provisioned may identify one or more device images 18a, the device provisioning settings, such as the settings 18b for a one-time programmable (OTP) memory 17b of the electronic device 17, and other unique device provisioning configuration information 18c, such as address ranges, serial numbers for batches, injected keys, device-specific security certificates, individual passphrases. It may also include information and instructions on how to use the device secure enclave if it has one. Conventionally, the configuration format, the script, and the configuration tool(s) 18 are generally specific to the production system 13 and potentially also to the OEM of the electronic device(s) 17.

As illustrated in figure 1, the production configuration is entered into the production system 13 which uses some scripts and/or algorithms 13a to program the various aspects of the configuration to the particular electronic device 17 device, such as writing securitysensitive provisioning data into a secure enclave 17a, the OTP memory 17b, a non-volatile memory 17c and/or a RAM 17d (including a battery backed up RAM) of the electronic device 17 and or setting non-volatile configuration, for instance, to disable test and debug ports and set tamper circuits.

As electronic microprocessors are becoming more and more sophisticated and complex, the configuration, script and algorithms used by the production system 13 of figure 1 are getting more complex, compounded by the use of security enclaves and other security functions. This makes it a highly skilled job to prepare the production system 13 for any change in the device 17 or configuration. Most production systems are scaled to deal with a certain range of throughput, with the larger more costly systems dealing with the larger quantities. Inevitably initial production will be tentative on smaller production systems while waiting to gauge the success of the product. Consequently, the initial production will be achieved invariably on smaller capacity production systems (often at the OEM's site where security may not initially be important, whereas for volume production security becomes more of an issue). If the volumes ramp up the original production system may not have the capacity to meet the orders. Thus, moving to a larger production system is desirable but may not be possible because know-how used for implementing the original production system may no longer be available to verify that the product move to a bigger production system has been done correctly. This results in the OEM being unable to benefit from cheaper volume production for fear of bricking products accidentally without having the ability to determine the cause and fix it. Furthermore, there may be a considerable additional cost and time delay in moving to a higher volume production system. Even if the skills to verify the product still exist, the re-verification time and potentially re-certification time is considerable. Certain industries, for instance, the automotive industry may require a complete re-certification if production is moved.

With the trend of electronic chips and microprocessors becoming more and more complex, the issue becomes even more challenging, as a bricked electronic device does not provide straightforward information about what is wrong with the device. Consequently, the sign off against "first articles" may be very important, which gives the production factory the ability to provision the same electronic device repeatably in a way that the electronic device works properly. Usually, the process of introducing a new electronic device, i.e. product into a provisioning line involves the following stages: (a) generation of engineering samples (created for development); (b) generation of first prototype(s) (created for sign off); (c) volume production; and (d) single chip processing. Often the evolution from stage (c) to stage (d) may not occur, because of the difficulty in retooling and then re-validating that the products produced are identical between the products irrespective of the manufacturing system used to produce the product. Often any change in production would require a new generation of first prototype(s) resulting in additional costs.

Currently, every electronic device requires its own unique script to be correctly provisioned. Moreover, each production system may have different configuration tools needed to enable manufacture. The overall impact is that a lot of effort is expended developing individual scripts, with much individual testing. It is also difficult to redo first articles on a modified manufacturing line including a new or a different programmer.

A security requirement that may in future become regional law is the ability to patch against vulnerabilities discovered during the lifetime of electronic equipment. To do this correctly would require manufacture of new product containing new application images with security patches in place: if this is not done in the factory the product may be at risk until the customer does a software update which may put the product manufacturer at risk of legal action. Ideally the factory can upgrade the image it installs. However, it also has to be sure the new product is functional despite it having changed. Currently this is not possible without redoing first articles with each security patch. This situation is exacerbated by the growing number of security vulnerabilities in the underlying operating systems and other utilities in a production site's equipment as time goes by (for instance many older operating systems (OS) no longer get security patches) but the software cannot be upgraded for fear that unexpected changes in the environment might affect the provisioned devices.

Thus, there is a need for improved apparatuses and methods for controlling the secure provisioning of electronic components or devices, such as chips or microprocessors, for electronic equipment in a more flexible manner.

### SUMMARY OF THE INVENTION

It is therefore an object of the invention to provide improved apparatuses and methods for controlling the secure provisioning of electronic components or devices, such as chips or microprocessors, for electronic equipment in a more flexible manner.

The foregoing and other objects are achieved by the subject matter of the independent claims. Further implementation forms are apparent from the dependent claims, the description and the figures.

According to a first aspect, a provisioning control apparatus, in particular a secure HSM, a TPM, a USIM, and similar security devices, is provided, wherein the provisioning control apparatus is configured to be coupled to a provisioning equipment server. The provisioning equipment server is electrically connectable with at least one electronic device such as one or more electronic components for provisioning the one or more electronic components with security sensitive provisioning data.

The electronic components may comprise chips, microprocessors or other programmable electronic components, such as non-volatile memories, e.g. Flash memories, application processors, memory control units (MCUs), electrically erasable programmable read only memories (EEPROM), programmable logic devices (PLDs), field programmable gate arrays (FPGAs), systems-on-chip (SoC), and microcontrollers incorporating non-volatile memory elements as well as any combinations thereof.

The provisioning control apparatus according to the first aspect comprises a communication interface configured to receive information about one or more provisioning capabilities of the provisioning equipment server for provisioning the electronic device with the security sensitive provisioning data. Moreover, the provisioning control apparatus according to the first aspect comprises a processing circuitry configured to generate, based on a product configuration of the electronic device and the information about the one or more provisioning capabilities of the provisioning equipment server, a provisioning script, wherein the provisioning script defines one or more provisioning operations for provisioning the electronic device with the security sensitive provisioning data.

In an embodiment, the provisioning script comprises one or more provisioning commands, wherein each provisioning command instructs the provisioning equipment server to perform a provisioning operation.

In an embodiment, the one or more provisioning commands comprise: a command for writing the security sensitive provisioning data to the electronic device; a command for executing an application on the electronic device; a command for resetting the electronic device; a command for reading from a memory of the electronic device; a command for checking a status of the electronic device; a command for ejecting the electronic device.

In an embodiment, the provisioning control apparatus is configured to be coupled to a further provisioning equipment server, wherein the further provisioning equipment server is electrically connectable with the at least one electronic device for provisioning the electronic device with the security sensitive provisioning data. The communication interface is configured to receive further information about one or more provisioning capabilities of the further provisioning equipment server for provisioning the electronic device with the security sensitive provisioning data and the processing circuitry is configured to generate a further provisioning script for provisioning the electronic device with the security sensitive provisioning data based on the product configuration of the electronic device and the further information about the one or more provisioning capabilities of the further provisioning equipment server.

In an embodiment, the further provisioning script differs from the provisioning script, if the one or more provisioning capabilities of the further provisioning equipment server differ from the one or more provisioning capabilities of the further provisioning equipment server.

In an embodiment, the processing circuitry is further configured to generate a digital fingerprint of the one or more provisioning operations defined by the provisioning script.

In an embodiment, the digital fingerprint comprises a command sequence defined by the provisioning script, a sequence of command responses, timing information about the command sequence and/or information about the power consumption of the electronic device.

In an embodiment, the processing circuitry is further configured to cryptographically secure the fingerprint.

In an embodiment, the provisioning control apparatus is configured to be coupled to a further provisioning equipment server, wherein the further provisioning equipment server is electrically connectable with the at least one electronic device for provisioning the electronic device with the security sensitive provisioning data. The processing circuitry is further configured to generate a further fingerprint of the one or more provisioning operations defined by the provisioning script and to compare the fingerprint with the further fingerprint.

In an embodiment, the processing circuitry of the provisioning control apparatus is configured to implement machine learning, for instance, a neural network for comparing the fingerprint with the further fingerprint.

According to a second aspect a provisioning system is provided, wherein the provisioning system according to the second aspect comprises a provisioning control apparatus according to the first aspect and a provisioning equipment server.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a conventional production system for provisioning an electronic device;
Fig. 2 shows a schematic diagram illustrating a production system including a provisioning control apparatus according to an embodiment for provisioning an electronic device;
Fig. 3 shows a schematic diagram illustrating a more detailed embodiment of a production system including a provisioning control apparatus for provisioning an electronic device;
Fig. 4 shows a signaling diagram illustrating a provisioning procedure implemented by a secure provisioning apparatus according to an embodiment;
Figs. 4a-4c show signaling diagrams illustrating more details of the provisioning procedure of figure 4;
Fig. 5 shows a schematic diagram of a production system including a provisioning control apparatus according to an embodiment implementing a fingerprint generator; and
Fig. 6 shows a schematic diagram of a production system including a provisioning control apparatus according to an embodiment implementing a fingerprint comparison.

In the figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be implemented. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

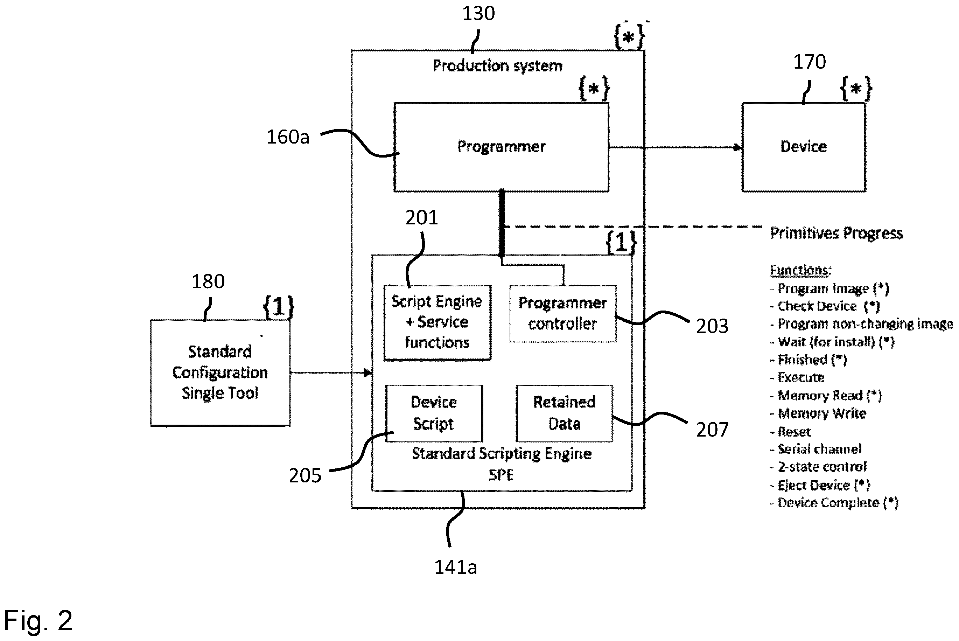

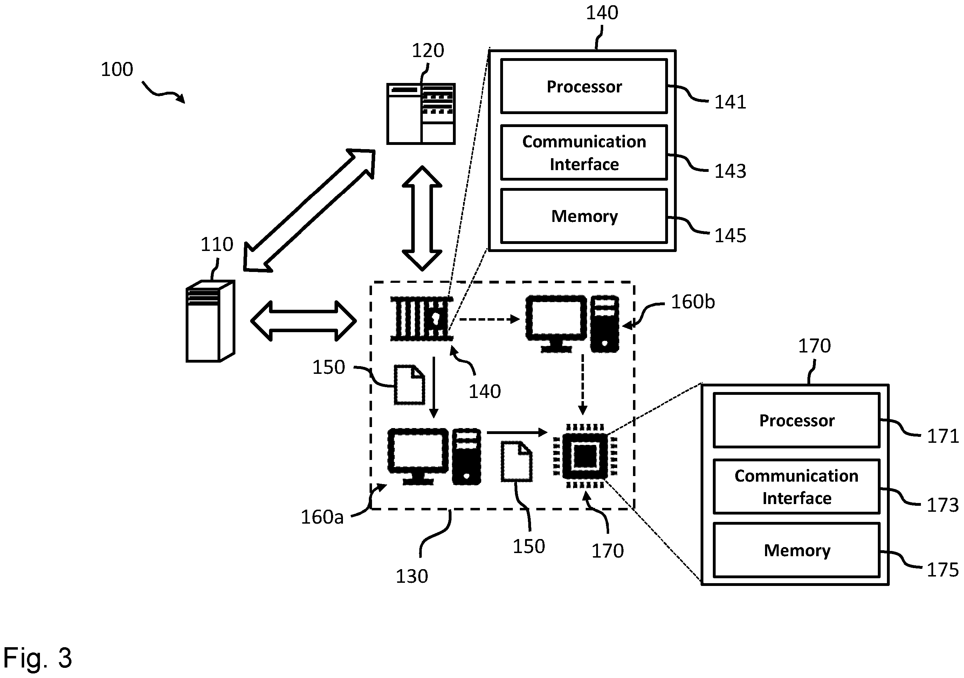

Figure 2 shows a schematic diagram illustrating a production system 130 (also referred to as provisioning system 130) including a scripting engine 141a implemented by a processing circuitry 141 of a provisioning control apparatus 140 (shown in more detail in figure 3) according to an embodiment for provisioning an electronic device 170. In the embodiment shown in figure 2, the scripting engine 141a implemented by the processing circuitry 141 of the provisioning control apparatus 140 (shown in more detail in figure 3) comprises or implements script engine and service functions 201, a programmer controller 203, a device script 205 and retained data 207.

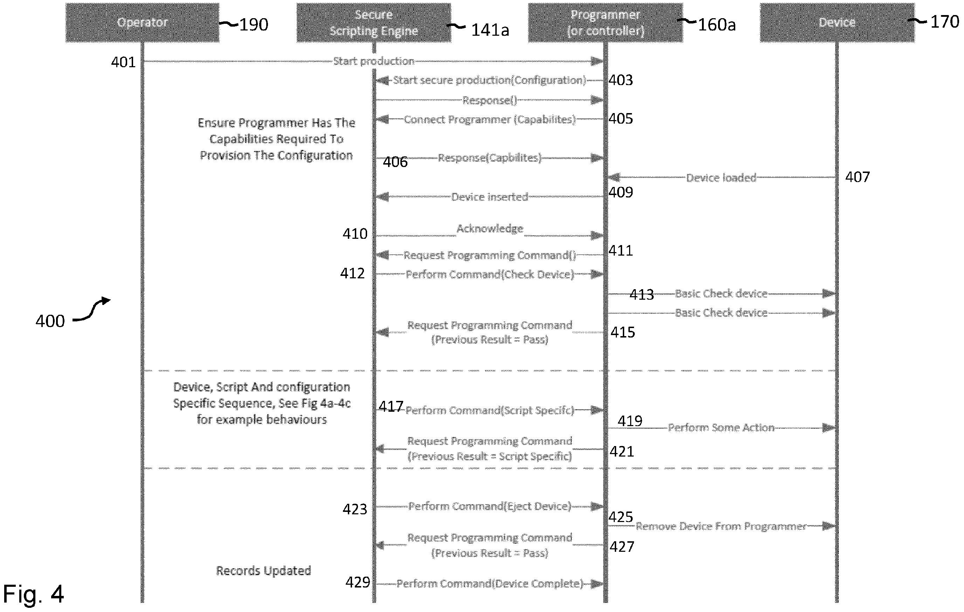

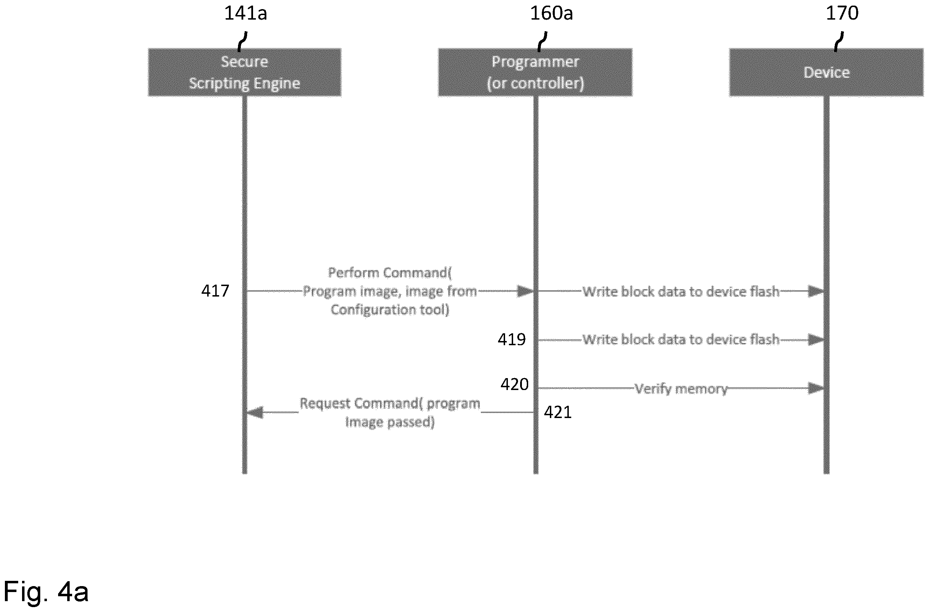

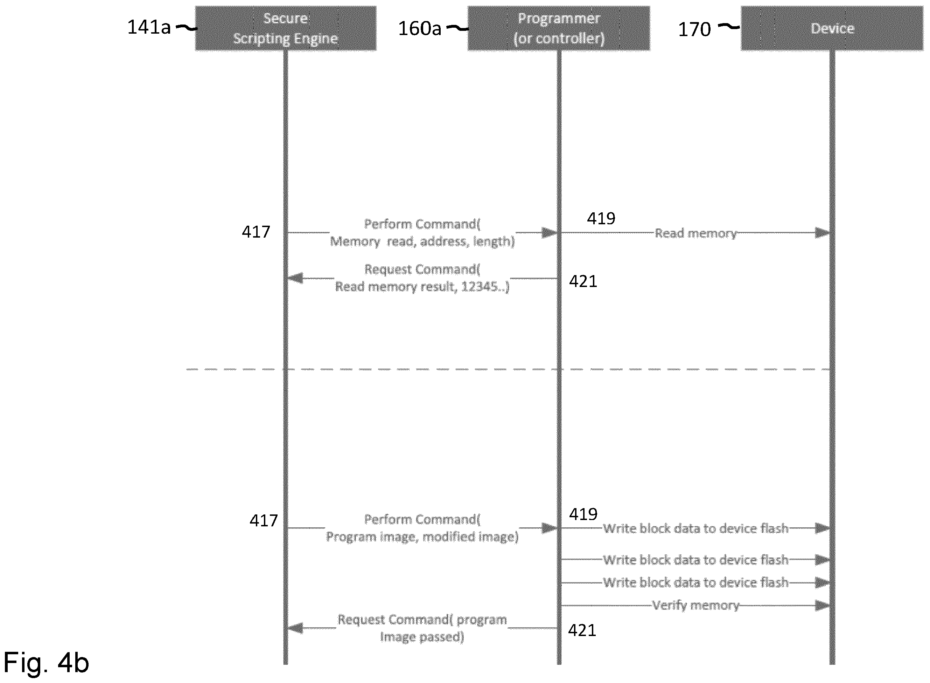

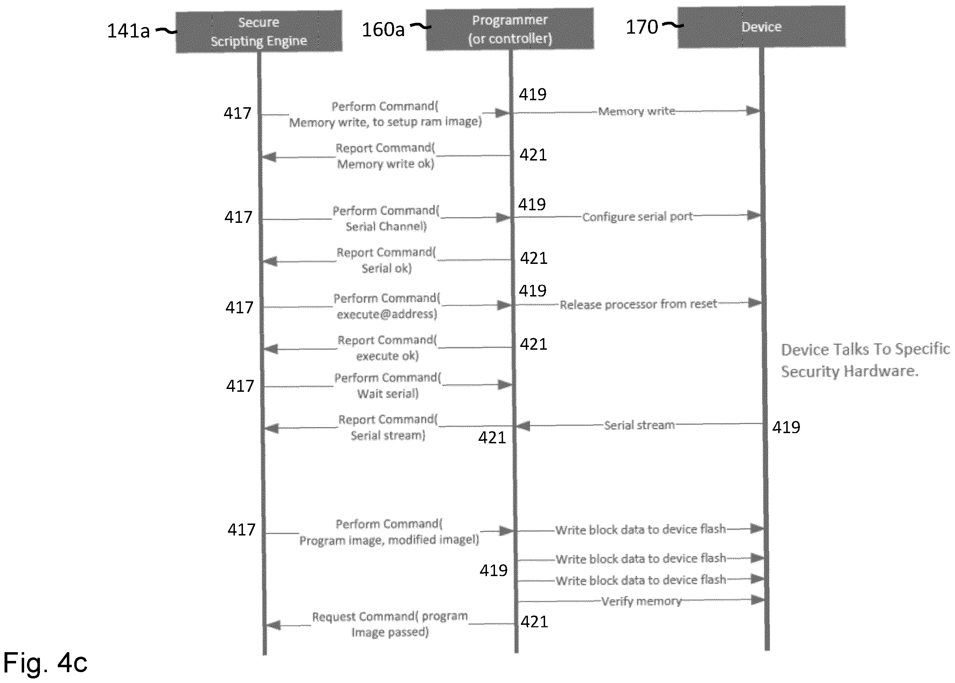

The device script 205 comprises device-specific instructions which collectively produce the sequence in order to correctly set up the electronic device 170 (or short device 170) with the required provisioning information (this includes the necessary application software, and unique device information). The sequence and data provisioned is dependent on the OEM configuration produced by the use of the standard configuration tool 180. Examples of the more detailed sequence are shown in figures 4, 4a, 4b, 4c.

The script engine 201 is responsible for causing execution of the correct script in response to messages received from the programmer 160a. It also may provide a series of primarily cryptographic functions which can be executed by the script, (e.g., the ability to generate keys, sign data, sign certificates, and the like).

The retained data 207 may hold in a secure manner, two types of information, firstly the configuration information provided by the OEM (for example keys to be used with in the production system for the provisioning of devices 170), and secondly information about the previous parts produced by the script (for example, the count used for ensuring if any further production can occur, the sequence numbers of the devices 170).

The programmer controller 203 provides an interface from the script to the messages sent to the programmer 160a, i.e., it translates the scripting functions into binary protocols sent over physical interfaces, e.g. ethernet, serial, USB. It also handles the errors on the communication protocol and the connection and disconnection of the programmer 160a.

Thus, as will be described in more detail below, the scripting engine 141a implemented by the processing circuitry 141 of the provisioning control apparatus 140 provides an interface to a first and second provisioning equipment server 160a,b (further illustrated in figure 3 and also referred to as "programmers" 160a,b herein) based on a set of provisioning primitives or commands defined for the scripting engine 141a. Thus, a tool is provided for configuring secure loT applications and package the data and provisioning commands for the scripting engine 141a that may communicate with a multitude of different provisioning equipment servers using the interface to drive them, to provision a multitude of different electronic devices 170. Thus, embodiments disclosed herein allow production to be done on different provisioning equipment servers 160a,b using the same product configuration. Thus, based on embodiments disclosed herein production can be moved from one line to another with a different provisioning equipment server 160a,b very easily using the same provisioning control apparatus 140. Specific knowledge of the constraints of a production system are hidden behind standard interfaces. Therefore, a provisioning script can be developed earlier in the device lifecycle and only once per OEM (i.e. the provisioning script does not have to be generated anew for each provisioning equipment server 160a,b). In the embodiment shown in figure 2, the elements marked with "{*}" can be present multiple times within the system, while the elements marked with "{1}" may be present only once.

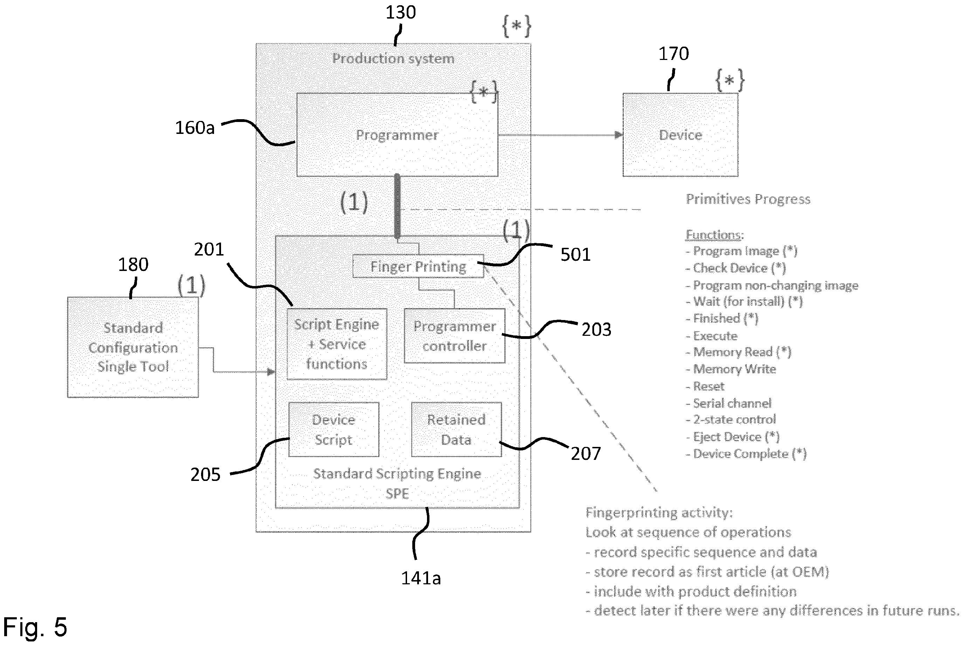

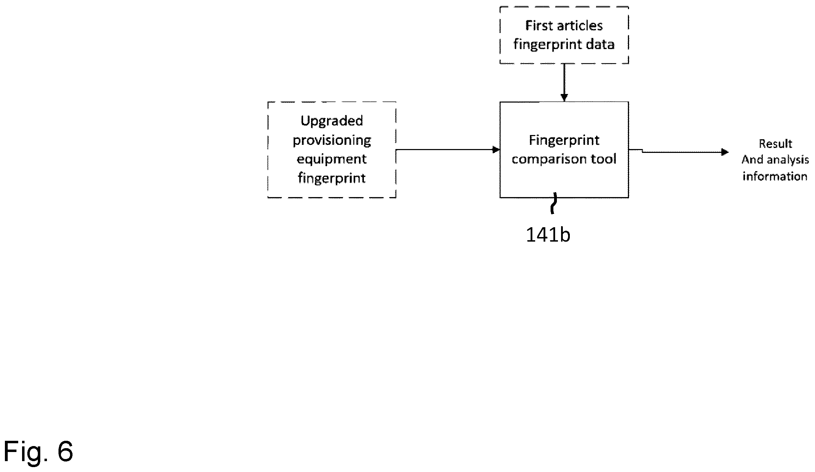

As will be appreciated, in the embodiment shown in figure 2, the scripting engine 141a implemented by the processing circuitry 141 of the provisioning control apparatus 140 provides a single point interface between the configurator 180 and the one or more provisioning equipment servers, i.e. the programmers 160a, 160b for provisioning the electronic devices 170. In this way the processing circuitry 141 of the provisioning control apparatus 140 may further monitor the commands used to drive the one or more provisioning equipment servers, i.e. the programmers 160a, 160b and to generate a fingerprint on the basis of these commands, as will be described in more detail further below in the context of figures 5 and 6.

As illustrated in figure 2, the provisioning control apparatus 140 may provide an application programming interface (API) between the scripting engine 141a and the provisioning equipment server, i.e. the programmer 160a, 160b. In an embodiment, the API between the scripting engine 141a may define a set of primitives or commands, which may include one of the following primitives/functions: memory write (which can include flash memory, OTP, and the like); memory read; establish a secure communication channel (to a program running on the electronic device 170); execute a program running on the electronic device 170 (used in conjunction with the communication channel); reset the electronic device 170 (cause a restart); check whether the electronic device 170 is coupled to, e.g. inserted in the provisioning equipment server, i.e. the programmer 160a, 160b; report scripting status; generate provisioning record; and/or blank the electronic device 170 (e.g. erase the flash memory of the electronic device 170). Note that the communication channel mentioned above may be needed to access hardware in the device 170 that cannot be accessed through programmer memory reads, and this may also be used for performance reasons where local processing may be quicker than returning large amounts of data to the provisioning control apparatus (for instance running a hashing algorithm internally on the device 170 rather than by returning each data byte to the provisioning control apparatus for it to do the hashing). The channel may also be used where information is not allowed to escape from the device 170 over any interface, for instance generation of private keys within the device 170 with only revealing the public part of the key externally.

Moreover, by means of the API the scripting engine 141a may be configured to request one or more of the following actions from the provisioning equipment server, i.e. the programmer 160a, 160b: check status of electronic device 170 (e.g. is it blank?); read serial number of the electronic device 170; program secure boot platform code; program application code; program provisioned data block; wait for install (secure lockdown); and/or finish programming. Moreover, as problems may occur in manufacture, the scripting engine 141a may be configured to request the provisioning equipment server, i.e. the programmer 160a, 160b to abort programming either attempting to leave the electronic device 170 in a finished or stable unfinished state, or an immediate abort.

Figure 3 shows a schematic diagram illustrating a more detailed embodiment of the production system 100 including the provisioning control apparatus 140 for securely provisioning the electronic devices 170. In an embodiment, the provisioning control apparatus 140 may be implemented at least partially as a secure HSM 140. For instance, in an embodiment, the provisioning control apparatus 140 may be a HSM implemented as a PC card. In a further embodiment, the provisioning control apparatus 140 may be a PC 140 including a HSM in the form of a PC card.

As will be described in more detail further below, the provisioning system 100 may comprise in addition to the secure provisioning control apparatus 140 a remote OEM server 110 (or short remote server 110), a security server 120 and a first and second provisioning equipment server 160a, b (herein also referred to as first and second "programmer" 160a,b) for provisioning or personalizing the electronic devices or components 170, such as chips or microprocessors 170 with security sensitive provisioning data 150, such as secret electronic keys, certificates and/or configuration data. As illustrated in figure 3, the secure provisioning control apparatus 140, the remote server 110 and the security server 120 may be configured to communicate with each other via a communication network, such as the Internet. Thus, the secure provisioning control apparatus 140, the remote server 110 and the remote security server 120 may be at different locations and under the control of different entities. As illustrated in figure 3, the secure provisioning control apparatus 140 and the first and second provisioning equipment server 160a,b may be located within a production environment 130, such as a personalization factory 130. In an embodiment, the remote server 110 may be under the control or associated with an electronic equipment manufacturer, e.g. an OEM, wherein the electronic equipment manufacturer assembles electronic equipment, such as smartphones, tablet computers or other types of loT or electronic consumer equipment, using the electronic devices or components 170 provisioned by the first and/or second provisioning equipment server 160a,b with the security sensitive provisioning data 150. In an embodiment, at least a portion of the security sensitive provisioning data 150 may include a firmware and/or secret electronic keys of the electronic equipment manufacturer associated with the remote OEM server 110.

In an embodiment, the secure provisioning control apparatus 140, the remote OEM server 110 and the remote security server 120 are configured to securely communicate with each other using one or more cryptographic schemes, such as a public key infrastructure and/or a hybrid cryptographic scheme. In an embodiment, the secure provisioning control apparatus 140 may be under the remote control of the security server 120.

As already described above, the secure provisioning control apparatus 140 is configured to be coupled to the first and/or second provisioning equipment server 160a,b, for instance, by a wired or a wireless connection. In an embodiment, the first and/or second provisioning equipment server 160a,b may be implemented as a personal computer (PC) and the secure provisioning control apparatus, e.g. HSM 140 may be implemented as a PC card inserted in the first and/or second provisioning equipment server 160a,b. The first and/or second provisioning equipment server 160a,b may comprise an electrical and/or mechanical interface for interacting directly or indirectly via a provisioning equipment with the electronic devices or components 170. For instance, the first and/or second provisioning equipment server 160a,b may comprise a personalization tray for personalizing a batch of electronic devices or components 170 inserted therein.

In the embodiment illustrated in figure 3 the secure provisioning control apparatus, e.g. HSM 140 comprises a processor 141, a communication interface 143 and a non-transient memory 145. The processor 141 of the secure provisioning control apparatus 140 may be configured to encrypt the security sensitive provisioning data 150 for obtaining encrypted security sensitive provisioning data 150. Moreover, the communication interface 143 of the secure provisioning control apparatus 140 may be configured to provide the encrypted security sensitive provisioning data 150 to the first and/or second provisioning equipment server 160a,b for storing the encrypted security sensitive provisioning data 150 in a non-volatile memory, e.g. a Flash memory 175 of the electronic device or component 170. In an embodiment the electronic device or component 170 may comprise a communication interface 173 configured to receive the encrypted security sensitive provisioning data 150 and a processor 171 configured to process and/or store the encrypted security sensitive provisioning data 150 in the non-volatile memory 175 of the electronic device or component 170. In an embodiment, the security sensitive provisioning data 150 may comprise one or more electronic keys, one or more certificates and/or configuration data, i.e. data defining one or more security configurations of the electronic device or component 170, in particular register settings.

In other embodiments not illustrated, the secure provisioning control apparatus 140 comprises a PC with an HSM within it. In another embodiment the secure provisioning control apparatus 140 is a PC with a device (e.g. a TPM) for establishing a secure connection to a remote server 110.

In large production systems, the first and/or second provisioning equipment server 160a,b may comprise a programmer controller configured to control a plurality of further programmers. Each programmer may be capable of provisioning multiple electronic devices 170 at the same time. The production environment may also include mechatronics that can automate insertion of new electronic devices 170 into the first and/or second provisioning equipment server 160a,b. In an embodiment, these mechatronics may be a component of the first and/or second provisioning equipment server 160a,b and controlled thereby.

The scripting engine 141a implemented by the processing circuitry 141 of the provisioning control apparatus 140 illustrated in figures 2 and 3 may provide personalization of each electronic device 170 as it is provisioned. In other words, by means of the provisioning procedure each electronic device 170 may obtain a unique element that allows identifying the respective electronic device 170. To this end, in an embodiment, the processing circuitry 141 of the provisioning control apparatus 140 may have access to a Certificate Authority signing key (that may be stored in the memory 145 of the provisioning control apparatus 140) for creating device certificates based on an identity that either comes from the device 170 itself or is applied by means of the production configuration provided by the configurator 180.

A more detailed embodiment of a provisioning procedure 400 performed by the scripting engine 141a of the provisioning control apparatus 140 together with the provisioning equipment server, i.e. programmer 160a for provisioning the electronic device(s) 170 is shown in figure 4. As can be taken from figure 4, several of the steps of the provisioning procedure 400 trigger a response or an acknowledgment message, which are generally known and, thus, will not be described in greater detail in the following.

In a step 401 of figure 4 an operator 190 starts the provisioning procedure 400 by starting the provisioning equipment server, i.e. programmer 160a. Step 401 may include providing an identifier of the product configuration to be used for provisioning the electronic device(s) 170 or the whole product configuration.

In a step 403 of figure 4 the provisioning equipment server, i.e. programmer 160a requests the processing circuitry 141 of the secure provisioning apparatus 140 to start the secure provisioning procedure. In response to the request in step 403, the provisioning control apparatus 100 examines the product configuration associated with the request 403 to determine that it can operate using this product configuration, and to find any associated information for this product configuration (e.g. how many electronic devices 170 have already been produced based on this product configuration).

In a step 405 of figure 4 the provisioning control apparatus 140 connects to the provisioning equipment server, i.e. programmer 160a. As part of this step 405 the scripting engine 141a implemented by the processing circuitry 141 of the secure provisioning apparatus 140 obtains information about the provisioning capabilities of the provisioning equipment server, i.e. programmer 160a. The information about the provisioning capabilities of the programmer 160a provided to the provisioning control apparatus 140 may include the list of optional functions or commands which the programmer 160a can perform illustrated in figure 2. Knowing these capabilities and the requirements of the script the scripting engine 141a implemented by the processing circuitry 141 of the provisioning control apparatus 140 can determine if the programmer 160a has the necessary capabilities to provision the electronic device(s) 170. If this is not the case, then the provisioning control apparatus 140 may terminate the provisioning run. As part of the response 406 to step 405, the provisioning control apparatus 140 may indicate to the programmer 160a the additional services it can offer in order to improve the performance of the production system 130, as illustrated in more detail in figure 4a. Moreover, as already described above, based on the information about the provisioning capabilities of the programmer 160a the scripting engine 141a implemented by the processing circuitry 141 of the provisioning control apparatus 140 may adapt the provisioning script, i.e. the sequence of provisioning steps, to the provisioning capabilities of the programmer 160a. For instance, if the programmer 160a supports local storage of provisioning data (e.g., to allow optimization of programming time), it will request parts of the application / image that is the same for all devices, to be stored locally in the programmer, and not need to communicate the complete image for each device.

In steps 407 and 409 of figure 4 the electronic device 170 is loaded into the programmer 160a (for instance, mechanically and/or electrically connected to the programmer 160a) and the scripting engine 141a of the provisioning control apparatus 140 is informed accordingly. At this point in time the provisioning control apparatus 140 may ensure that it is authorized to provision more electronic devices 170 and update the status of the number of electronic devices provisioned. If this is successful (acknowledgement in step 410) and the programmer 160a indicates in a step 411 that it is ready to operate, the provisioning control apparatus 140 may request in a step 412 the programmer 160a to perform basic electrical tests of the electronic device 170. This is likely to result in a number of programmer actions 413 checking connectivity, power consumption and looking at whether the device 170 is in a blank / programmable mode (i.e. it has not already been used). Depending on the device type it may also take actions to return the device 170 to a blank state.

If the electronic device 170 is not in the expected state, the scripting engine 141a may, according to the configuration, take special actions, for instance determine whether the device should be erased, or whether the device 170 should be rejected. An example here is where the operator has reinserted a previously provisioned device 170 by mistake, and the script determines that it does not need to be provisioned.

Once the device 170 has been shown to be in a programable state, the provisioning equipment server, i.e. programmer 160a in a step 415 of figure 4 requests one or more programming commands from the scripting engine 141a implemented by the processing circuitry 141 of the secure provisioning apparatus 140 and perform the corresponding action(s) in steps 417 and 419.

As will be appreciated, although figure 4 only shows a single pair of the steps 417, 419 the provisioning procedure 400 illustrated may comprise several loops of the steps 417 and 419 which may each be completed with a report command or request command step 421 of the programmer 160a to the scripting engine 141a.

In an embodiment shown in figure 4a, which may comprise a step 420 of verifying the memory 175 of the device 170 by the programmer 160a, the one or more programming commands from the scripting engine 141a may operate on the image 18a (which may contain at least a portion of the security sensitive provisioning data 150) downloaded from the provisioning equipment server, i.e. programmer 160a. A further embodiment shown in figure 4b modifies the image 18a with unique information read from the device (figure 4c), e.g. the generation of a key pair and certificate. A further embodiment shown in figure 4c requires that software is executed on the device 170 in order to configure security hardware.

Once all provisioning steps have been performed, the scripting engine 141a implemented by the processing circuitry 141 of the secure provisioning apparatus 140 may instruct the programmer 160a in a step 423 to eject the fully provisioned electronic device 170 (step 425) and to terminate the provisioning procedure (steps 427 and 429).

In an embodiment the provisioning equipment server, i.e. programmer 160a may request the scripting engine 141a implemented by the processing circuitry 141 of the secure provisioning apparatus 140 to record one or more provisioning results, such as whether the provisioning of the electronic device 170 was successful, and perform one or more post provisioning tests with the electronic device 170 for checking the provisioned electronic device 170 is functioning correctly.

During the provisioning of a batch of electronic devices 170 in the way described above the provisioning equipment server, i.e. programmer 160a may request information about the current provisioning status from the scripting engine 141a implemented by the processing circuitry 141 of the secure provisioning apparatus 140, such as information about how many electronic devices 170 have already been provisioned and/or remain to be provisioned.

Once a complete batch of electronic devices 170 has been provisioned the provisioning equipment server, i.e. programmer 160a may issue a "production complete" command to the scripting engine 141a implemented by the processing circuitry 141 of the secure provisioning apparatus 140.

In the following further embodiments will be described that allow reducing the time and costs to perform the re-validation of electronic devices 170 provisioned by the second provisioning equipment server, i.e. programmer 160b. As will be appreciated, this also may benefit the time to bring the first provisioning equipment server, i.e. programmer 160a "online" by validating that the electronic devices 170 provisioned by the first provisioning equipment server, i.e. programmer 160a matches those prototype electronic devices provisioning by a prototyping system. The embodiments described in the following are configured to use a "fingerprint" of how each electronic device 170 is provisioned. Figure 5 shows a variant of the embodiment shown in figure 2 and already described above, wherein in the embodiment shown in figure 5 the scripting engine 141a implemented by the processing circuitry 141 of the secure provisioning apparatus 140 further comprises a fingerprint generator 501.

In an embodiment, the fingerprint generator 501 is configured to generate a fingerprint of the provisioning of a respective electronic device 170. In an embodiment, this fingerprint may comprise information about the order of programming commands issued by the scripting engine 141a for provisioning the electronic device 170 and the responses thereto. Moreover, the fingerprint may comprise data which is common across all electronic devices 170 for each command (i.e. data that is neither device specific nor command specific). For instance, there will be certain values known to be unique per electronic device 170, such as the device identity and the device private key and device certificate, however other data provisioned would not be expected to change, which may define the fingerprint. In an embodiment, the fingerprint generator 501 is configured to determine patterns of data in the streams of provisioning data being provided to the programmer 160a and the electronic devices 170, which are common to the electronic devices 170. For instance, in an electronic device 170 with a large 2 Mb memory virtually all the memory locations will be identical, except a few 100 bytes which relate to the unique identity of the electronic device 170.

In a further embodiment, the fingerprint may further comprise one or more of the following: information about one or more time differences between a request and a response for provisioning; information about the power consumption, e.g. a power profile, used by the electronic device 170 to perform the programming, i.e. provisioning; information about other environmental factors, such as heat, noise and the like; information about memory areas of the electronic device 170, where the same unique value is reused across several addresses and is expected to be the same in the different places but different for each electronic device 170 (e.g. an identity used in a certificate and elsewhere); information about memory areas where one address range value is determined by some known function of another set of addresses (for instance, a hash value that includes an identity that will be different for each electronic device 170 but can be calculated using a known formula); and/or information about memory areas where one or more address range values are expected to be different for every device (i.e. if the same value is used it indicates a problem such as a cloned device).

In an embodiment, at the beginning of a production run the fingerprint generator 501 implemented by the processing circuitry 141 is primed. On programming, i.e. provisioning the first electronic device 170, the fingerprint generator 501 may record the command sequence, responses as well as other attributes, such as time, power consumption, and the like, used for provisioning the electronic device 170. For instance, the fingerprint generator 501 may record "the fourth step of the provisioning process took 3s".

Once the first or a couple of first electronic devices 170 have been provisioned and the fingerprint has been generated on the basis thereof, the processing circuitry 141, e.g. the fingerprint generator 501 is configured to monitor the provisioning of further electronic devices 170 for differences with respect to the fingerprint generated on the basis of the one or more first electronic devices 170. For example, if one of the further electronic devices 170 took 4s to produce, the fingerprint generator 501 may update the time part of the fingerprint to between 3s and 4s (over a complete production run this may expand to 2.8s to 4.3s).

On completion of the production run the fingerprint generated by the fingerprint generator 501 implemented by the processing circuitry 140 of the provisioning control apparatus 140 may be transmitted to the OEM server 110 for examination. Although this examination may be performed and be of interest, when only one programmer, e.g. the first provisioning equipment server, i.e. programmer 160a is used, it provides specific advantages, when the provisioning is switched to a different programmer, e.g. the second provisioning equipment server, i.e. programmer 160b. This is because in this case, the fingerprint generated when using the first provisioning equipment server, i.e. programmer 160a for provisioning the electronic devices 170 may be compared with the fingerprint generated when using the second provisioning equipment server, i.e. programmer 160b for provisioning the electronic devices 170. By means of the comparison of these two fingerprints it is possible to determine whether the two provisioning equipment servers, i.e. programmers 160a,b are behaving differently. For instance, for the example already described above the fingerprint generated by the fingerprint generator 501 implemented by the processing circuitry 140 of the provisioning control apparatus 140 may contain the information that the second provisioning equipment server, e.g., programmer 160b takes 6s to provision an electronic device 170. For instance, the second programmer 160b has programmed an area of memory to different values to the first which is determined either a significant change or acceptable for differences between individual devices.

As already described above, the comparison between at least two fingerprints generated by the fingerprint generator 501 implemented by the processing circuitry 140 of the provisioning control apparatus 140, when operating with at least two different provisioning equipment servers, i.e. programmers 160a,b may be performed, for instance, by the OEM server 110. In a variant illustrated in figure 6 this comparison may be performed by a comparison tool 141b implemented by the processing circuitry 140 of the provisioning control apparatus 140.

In an embodiment, the fingerprint may be secured by the fingerprint generator 501 implemented by the processing circuitry 140 of the provisioning control apparatus 140 using crypto-graphic techniques such that the currently used provisioning equipment server, i.e. programmer 160a,b cannot interfere with it. For instance, in an embodiment, the fingerprint generator 501 implemented by the processing circuitry 140 of the provisioning control apparatus 140 may use a symmetric or asymmetric encryption for cryptographically protecting the fingerprints.

In a further embodiment, artificial intelligence, such as in the form of neural networks, may be used for determining differences of fingerprints generated for different provisioning equipment servers, i.e. programmers 160a,b. For instance, in an embodiment, the processing circuitry 140 of the provisioning control apparatus 140 may implement a neural network for detecting differences of fingerprints generated for different provisioning equipment servers, i.e. programmers 160a,b. This may detect relationships that a human would not think of that determine a genuine similarity or difference. For example, artificial intelligence may be able to gauge expected time differences probabilistically in a way humans would miss.

As will be appreciated, the fingerprints described above can be used to identify if a provisioning equipment server, i.e. programmer 160a,b has potentially been compromised, i.e. hacked (for instance, by means of a logging and "man in the middle machine" in the provisioning equipment server, i.e. programmer 160a,b). This is because, such an attack results in a change of the behavior of the provisioning equipment server, i.e. programmer 160a,b (for instance, the time to perform one or more stages of the provisioning procedure may increase) that is reflected in the fingerprint. Another example of the use of fingerprinting is to detect where the provisioning on one system such as a low volume system differs significantly from an equivalent high volume system supposedly producing the same device types, but the fingerprinting can alert the manufacturer that there is a problem with the second system that needs further investigation, which could for instance be due to incorrect configuration in the second programmer 160a.

In an embodiment, the fingerprint may be generated already for prototype electronic devices 170. Once prototyping has been successful and volume production is to begin, the fingerprint generated on the basis of the prototype electronic devices 170 may be included in the production configuration used by the scripting engine 141a implemented by the processing circuitry 141 of the secure provisioning apparatus 140 for implementing the provisioning procedure of the electronic devices 170 for the volume production. During volume production the fingerprint generator 501 implemented by the processing circuitry 140 of the provisioning control apparatus 140 generates the fingerprint for the volume production electronic devices 170. In parallel, as already described above in the context of figure 6, the processing circuitry 141 of the provisioning control apparatus 140 may be configured to compare the fingerprint for the volume production electronic devices 170 with the fingerprint generated on the basis of the prototype electronic devices 170. In case the processing circuitry 141 of the provisioning control apparatus 140 detects differences between these fingerprints (that may be larger than a predefined threshold and, thus, indicate that provisioning equipment server, i.e. programmer 160a,b may have been compromised), the processing circuitry 141 of the provisioning control apparatus 140 may halt the provisioning equipment server, i.e. programmer 160a,b and erase any security sensitive information, such as the image 18a, on the provisioning equipment server, i.e. programmer 160a,b. Moreover, this allows detecting cloned electronic devices 170, which may exhibit a different power consumption and/or timing profiles reflected in the fingerprint.

Thus, embodiments disclosed herein allow secure provisioning of a multitude of electronic devices 170 with the flexibility of using multiple different provisioning equipment servers, i.e. programmers 160a,b, This higher flexibility allows reducing the time to provision the electronic devices 170 and, thus, saves costs. Moreover, because the provisioning control apparatus 140 may easily switch between different provisioning equipment servers, i.e. programmers 160a,b, the most suitable provisioning equipment server, i.e. programmer 160a,b for a specific task may be selected (for instance, a high volume provisioning equipment server, i.e. programmer 160a,b). Thus, it becomes quick and easier to move from small volume production to larger volume production (and back again which may be useful towards the end of life of the production). It becomes feasible to change the production line on the fly to allow more efficient production.

The fingerprinting implemented by embodiments disclosed above allows to verify that an electronic device 170 has been correctly provisioned, whatever the provisioning equipment server, i.e. programmer 160a,b that is connected. This also provides the advantage that if a security patch is applied the provisioning control apparatus 140 can change to the patched software with minimum risk to the patched electronic devices 170.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application.

Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless of whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A provisioning control apparatus (140) configured to be coupled to a provisioning equipment server (160a), the provisioning equipment server (160a) being electrically connectable with at least one electronic device (170) for provisioning the electronic device (170) with security sensitive provisioning data (150), wherein the provisioning control apparatus (140) comprises:
a communication interface (143) configured to receive information about one or more provisioning capabilities of the provisioning equipment server (160a) for provisioning the electronic device (170) with the security sensitive provisioning data (150); and
a processing circuitry (141) configured to generate, based on a product configuration of the electronic device (170) and the information about the one or more provisioning capabilities of the provisioning equipment server (160a), a provisioning script, wherein the provisioning script defines one or more provisioning operations for provisioning the electronic device (170) with the security sensitive provisioning data (150).

2. The provisioning control apparatus (140) of claim 1, wherein the provisioning script comprises one or more provisioning commands, wherein each provisioning command instructs the provisioning equipment server (160a) to perform a provisioning operation.

3. The provisioning control apparatus (140) of claim 2, wherein the one or more provisioning commands comprise: a command for writing the security sensitive provisioning data (150) to the electronic device (170); a command for executing an application on the electronic device (170); a command for resetting the electronic device (170); a command for reading from a memory of the electronic device (170); a command for checking a status of the electronic device (170); a command for ejecting the electronic device (170).

4. The provisioning control apparatus (140) of any one of the preceding claims, wherein the provisioning control apparatus (140) is configured to be coupled to a further provisioning equipment server (160b), wherein the further provisioning equipment server (160b) is electrically connectable with the at least one electronic device (170) for provisioning the electronic device (170) with the security sensitive provisioning data (150), wherein the communication interface (143) is configured to receive further information about one or more provisioning capabilities of the further provisioning equipment server (160b) for provisioning the electronic device (170) with the security sensitive provisioning data (150) and wherein the processing circuitry (141) is configured to generate a further provisioning script for provisioning the electronic device (170) with the security sensitive provisioning data (150) based on the product configuration of the electronic device (170) and the further information about the one or more provisioning capabilities of the further provisioning equipment server (160b).

5. The provisioning control apparatus (140) of claim 4, wherein the further provisioning script differs from the provisioning script, if the one or more provisioning capabilities of the further provisioning equipment server (160b) differ from the one or more provisioning capabilities of the further provisioning equipment server (160a).

6. The provisioning control apparatus (140) of any one of the preceding claims, wherein the processing circuitry (141) is further configured to generate a fingerprint of the one or more provisioning operations defined by the provisioning script.

7. The provisioning control apparatus (140) of claim 6, wherein the fingerprint comprises a command sequence defined by the provisioning script, a sequence of command responses, timing information about the command sequence and/or information about the power consumption of the electronic device (170).

8. The provisioning control apparatus (140) of claim 6 or 7, wherein the processing circuitry (141) is further configured to cryptographically secure the fingerprint.

9. The provisioning control apparatus (140) of any one of claims 6 to 8, wherein the provisioning control apparatus (140) is configured to be coupled to a further provisioning equipment server (160b), wherein the further provisioning equipment server (160b) is electrically connectable with the at least one electronic device (170) for provisioning the electronic device (170) with the security sensitive provisioning data (150), wherein the processing circuitry (141) is further configured to generate a further fingerprint of the one or more provisioning operations defined by the provisioning script and to compare the fingerprint with the further fingerprint.

10. The provisioning control apparatus (140) of claim 9, wherein the processing circuitry is configured to implement machine learning for comparing the fingerprint with the further fingerprint.

11. A provisioning system (130), comprising:
a provisioning control apparatus (140) according to any one of the preceding claims; and
a provisioning equipment server (160a,b).
